# EUROPEAN PATENT APPLICATION

(11) **EP 4 796 860 A1**
(43) Date of publication of application: **26.08.2026**
(21) Application number: 26157846.2
(22) Date of filing: 11.02.2026
(51) Int. Cl.: F24F 11/49, F24F 11/89, G01M 99/00, G01N 17/00

(54) **TESTING DEVICE FOR AIR CONDITIONER**

(30) Priority: 25.02.2025 CN 202510213793
(71) Applicant: Xiaomi Technology (Wuhan) Co., Ltd., Wuhan, Hubei 430000 (CN); Xiaomi Smart Appliances (Wuhan) Co., Ltd., Wuhan, Hubei 430073 (CN); Beijing Xiaomi Mobile Software Co., Ltd., Beijing 100085 (CN)
(72) Inventor: SHAN, Lianyu, Wuhan, Hubei, 430000 (CN); AO, Zhengyu, Wuhan, Hubei, 430000 (CN); YAN, Fubin, Wuhan, Hubei, 430000 (CN)
(74) Representative: Stöckeler, Ferdinand

(57) **Abstract**

A testing device for an air conditioner that includes an indoor unit chamber, a first outdoor unit chamber, and a second outdoor unit chamber. The indoor unit chamber includes first and second heat exchangers. A first outdoor unit in the first outdoor unit chamber cooperates with the first heat exchanger to heat the indoor unit chamber, and a second outdoor unit in the second outdoor unit chamber cooperates with the second heat exchanger to cool the indoor unit chamber. A heat transfer channel between selected chambers selectively permits mutual or one-way heat transfer and may comprise an airflow channel having opposed flow paths, a fan, and a controllable damper biased toward closure. The chambers may be arranged linearly. The device may further include external air inflow and outflow channels for ambient heat exchange, partitions with mounting frames for the heat exchangers, and a refrigerant outlet for discharging leaked refrigerant.

## Description

### TECHNICAL FIELD

The present invention generally relates to the technical field of an air conditioner, and more particularly, to a testing device for an air conditioner.

### BACKGROUND

In the related art, it is necessary for an air conditioner to be tested before delivery. Currently, a large-scale air conditioning system is installed in a laboratory by some manufacturers to achieve temperature regulation, allowing for testing in variable-temperature operations. However, such a configuration usually results in high energy consumption during the testing of an air conditioner.

### SUMMARY

An object of the present invention is to provide a testing device for an air conditioner, which facilitates the reduction of energy consumption for testing an air conditioner.

The present invention is defined by the appended claims.

The present invention in embodiments provides a testing device for an air conditioner, including: an indoor unit chamber, a first outdoor unit chamber, and a second outdoor unit chamber, the indoor unit chamber is equipped with a first heat exchanger and a second heat exchanger, the first outdoor unit chamber is equipped with a first outdoor unit; and the second outdoor unit chamber is equipped with a second outdoor unit, the first heat exchanger cooperates with the first outdoor unit for heating the indoor unit chamber, and the second heat exchanger cooperates with the second outdoor unit for cooling the indoor unit chamber;
a heat transfer channel is arranged between two of the indoor unit chamber, the first outdoor unit chamber, and the second outdoor unit chamber, allowing heat to be transferred mutually between the two of the indoor unit chamber, the first outdoor unit chamber, and the second outdoor unit chamber, or allowing heat to be transferred from one to another.

In an embodiment, the first outdoor unit chamber, the indoor unit chamber, and the second outdoor unit chamber are arranged in a straight line along a predetermined direction.

In an embodiment, the heat transfer channel includes an air flow channel for connecting the two of the indoor unit chamber, the first outdoor unit chamber, and the second outdoor unit chamber.

In an embodiment,
in a case that the air flow channel connects the indoor unit chamber and the first outdoor unit chamber,
   the air flow channel includes a first air flow channel and a second air flow channel,
   the first air flow channel is configured to allow an air in the indoor unit chamber to flow into the first outdoor unit chamber; and
   the second air flow channel is configured to allow an air in the first outdoor unit chamber to flow into the indoor unit chamber,
in the case that the air flow channel connects the indoor unit chamber and the second outdoor unit chamber,
   the air flow channel includes the first air flow channel and the second air flow channel,
   the first air flow channel is configured to allow an air in the second outdoor unit chamber to flow into the indoor unit chamber; and
   the second air flow channel is configured to allow an air in the indoor unit chamber to flow into the second outdoor unit chamber, or
   in the case that the air flow channel connects the first outdoor unit chamber and the second outdoor unit chamber,
   the air flow channel includes the first air flow channel and the second air flow channel,
   the first air flow channel is configured to allow an air in the second outdoor unit chamber to flow into the first outdoor unit chamber; and
   the second air flow channel is configured to allow an air in the first outdoor unit chamber to flow into the second outdoor unit chamber,
preferably,
wherein the first air flow channel is positioned proximate to a top of the testing device, and the second air flow channel is positioned proximate to a bottom of the testing device; or
the first air flow channel and the second air flow channel both are positioned proximate to the top of the testing device.

In an embodiment, the air flow channel is equipped with a flow control member, configured to open or close the air flow channel or regulate an opening degree of the air flow channel during the air flowing through.

In an embodiment, the flow control member is rotatably connected to the air flow channel, the air flow channel is equipped with a stop structure, and the flow control member is detachably abutted against the stop structure.

In an embodiment, the flow control member includes a plurality of flow control plates, the plurality of flow control plates each are rotatably connected to the air flow channel, each flow control plate partially overlaps its adjacent next flow control plate, an innermost flow control plate is detachably abutted against the stop structure.

In an embodiment, a rotation reset structure is provided between the flow control member and the air flow channel, and the rotation reset structure is configured to reset the flow control member to close the air flow channel.

In an embodiment,
the rotation reset structure is a rotation shaft, a rotation axis of the rotation shaft extends in a horizontal direction and is located above a center of gravity of the flow control member; or
the rotation reset structure is an elastic reset structure applying an elastic force that drives the flow control member to close the air flow channel.

In an embodiment, the air flow channel is equipped with a flow control member, configured to open or close the air flow channel or regulate an opening degree of the air flow channel during the air flowing through;
the first air flow channel and the second air flow channel each are equipped with the flow control member, and an opening direction of the flow control member at the first air flow channel is opposite to that at the second air flow channel.

In an embodiment, the air flow channel is equipped with a fan for providing power for the air to flow.

In an embodiment, the testing device is equipped with an external heat exchange channel for heat exchange between the testing device and a surrounding environment,
preferably,
wherein the external heat exchange channel includes an external air inflow channel and an external air outflow channel,
the external air inflow channel is configured to allow an ambient air outside the testing device to flow into the testing device; and
the external air outflow channel is configured to allow an air inside the testing device to flow out of the testing device,
more preferably, wherein the external air inflow channel is arranged at one of the indoor unit chamber, the first outdoor unit chamber, and the second outdoor unit chamber; and the external air outflow channel is arranged at one of the indoor unit chamber, the first outdoor unit chamber, and the second outdoor unit chamber,
further preferably, wherein the external air inflow channel is arranged at the second outdoor unit chamber; and the external air outflow channel is arranged at the second outdoor unit chamber,
still further preferably, wherein the external air inflow channel is positioned proximate to a bottom of the second outdoor unit chamber; and the external air outflow channel is positioned proximate to a top of the second outdoor unit chamber.

In an embodiment, a heat exchange apparatus for air heating or air cooling is provided inside one of the indoor unit chamber, the first outdoor unit chamber, and the second outdoor unit chamber.

In an embodiment,
a first partition is arranged between the indoor unit chamber and the first outdoor unit chamber, the first partition is equipped with a first installation frame, the first heat exchanger is fixed at the first installation frame; and
a second partition is arranged between the indoor unit chamber and the second outdoor unit chamber, the second partition is equipped with a second installation frame, the second heat exchanger is fixed at the second installation frame.

In an embodiment, the testing device is provided with a refrigerant outlet for discharging a refrigerant leaking from one or more of the first heat exchanger, the second heat exchanger, the first outdoor unit, or the second outdoor unit.

Other features and advantages of the present invention will be described in detail in the subsequent section of detailed description.

### BRIEF DESCRIPTION OF THE DRAWINGS

The accompanying drawings are used to provide further understanding of the present invention and constitute a part of this specification, used together with the specific embodiments below to explain the present invention, but do not construed any limitation on the present invention. In the drawings:
Figure 1 is a schematic diagram illustrating a front view for a testing device for an air conditioner according to an embodiment of the present invention;
Figure 2 is a schematic diagram illustrating another front view for a testing device for an air conditioner according to an embodiment of the present invention;
Figure 3 is a schematic diagram illustrating a top view for a testing device for an air conditioner according to an embodiment of the present invention;
Figure 4 is a schematic diagram illustrating a side view for a partial structure of a testing device for an air conditioner according to an embodiment of the present invention;
Figure 5 is a schematic diagram illustrating another side view for a partial structure of a testing device for an air conditioner according to an embodiment of the present invention;
Figure 6 is a schematic diagram illustrating a front view for a flow control member in a testing device for an air conditioner according to an embodiment of the present invention;
Figure 7 is a schematic diagram illustrating a side view for a flow control member in a testing device for an air conditioner according to an embodiment of the present invention;
Figure 8 is a schematic diagram illustrating another front view for a flow control member in a testing device for an air conditioner according to an embodiment of the present invention;
Figure 9 is a schematic diagram illustrating another side view for a flow control member in a testing device for an air conditioner according to an embodiment of the present invention; and
Figure 10 is an enlarged view for the part A in Figure 9.

### Reference Signs

11 - indoor unit chamber, 12 - first outdoor unit chamber, 13 - second outdoor unit chamber, 2 - heat transfer channel, 21 - air flow channel, 211 - first air flow channel, 212 - second air flow channel, 3 - flow control member, 31 - flow control plate, 4 - block structure, 5 - rotation reset structure, 6 - fan, 7 - external heat exchange channel, 71 - external air inflow channel, 72 - external air outflow channel, 8 - heat exchange apparatus, 91 - first installation frame, 92 - second installation frame, 10 - first heat exchanger, 20 - second heat exchanger, 30 - first outdoor unit, 40 - second outdoor unit, 100 - first partition, 200 - second partition.

### DETAILED DESCRIPTION

The specific embodiments of the present invention will be described in detail below in conjunction with the accompanying drawings. It should be understood that the specific embodiments described herein are only for illustration and explanation of the present invention, and are not intended to limit the present invention.

In the present invention, those directional terms used herein, such as "up, down, top, and bottom" are defined along a gravity direction of the testing device for an air conditioner, where "up" corresponds to "top", and "down" corresponds to "bottom", unless otherwise stated. Other directional terms used herein, such as "internal and external" refer to an interior and exterior relative to respective component's contours. The terms "first" and "second" are used to distinguish one component from another and do not imply any order or importance. In addition, when referring to the accompanying drawings, the same reference numerals in different drawings represent the same or similar component, which will not be repeated in the present invention.

An object of the present invention is to provide a testing device for an air conditioner, which facilitates the reduction of energy consumption for testing an air conditioner.

In order to achieve the above object, the present invention in embodiments provides a testing device for an air conditioner, including: an indoor unit chamber, a first outdoor unit chamber, and a second outdoor unit chamber, the indoor unit chamber is equipped with a first heat exchanger and a second heat exchanger, the first outdoor unit chamber is equipped with a first outdoor unit; and the second outdoor unit chamber is equipped with a second outdoor unit, the first heat exchanger cooperates with the first outdoor unit for heating the indoor unit chamber, and the second heat exchanger cooperates with the second outdoor unit for cooling the indoor unit chamber;
a heat transfer channel is arranged between two of the indoor unit chamber, the first outdoor unit chamber, and the second outdoor unit chamber, allowing heat to be transferred mutually between the two of the indoor unit chamber, the first outdoor unit chamber, and the second outdoor unit chamber, or allowing heat to be transferred from one to another.

In an embodiment, the first outdoor unit chamber, the indoor unit chamber, and the second outdoor unit chamber are arranged in a straight line along a predetermined direction.

In an embodiment, the first heat exchanger and the first outdoor unit are worked together to form a first unit under test (UUT); and the second heat exchanger and the second outdoor unit are worked together to form a second UUT.

In an embodiment, the heat transfer channel includes an air flow channel for connecting the two of the indoor unit chamber, the first outdoor unit chamber, and the second outdoor unit chamber.

In an embodiment, the air flow channel connects the indoor unit chamber and the first outdoor unit chamber;
the air flow channel includes a first air flow channel and a second air flow channel,
the first air flow channel is configured to allow an air in the indoor unit chamber to flow into the first outdoor unit chamber; and
the second air flow channel is configured to allow an air in the first outdoor unit chamber to flow into the indoor unit chamber.

In an embodiment, the air flow channel connects the indoor unit chamber and the second outdoor unit chamber;
the air flow channel includes a first air flow channel and a second air flow channel,
the first air flow channel is configured to allow an air in the second outdoor unit chamber to flow into the indoor unit chamber; and
the second air flow channel is configured to allow an air in the indoor unit chamber to flow into the second outdoor unit chamber.

In an embodiment, the air flow channel connects the first outdoor unit chamber and the second outdoor unit chamber;
the air flow channel includes a first air flow channel and a second air flow channel,
the first air flow channel is configured to allow an air in the second outdoor unit chamber to flow into the first outdoor unit chamber; and
the second air flow channel is configured to allow an air in the first outdoor unit chamber to flow into the second outdoor unit chamber.

In an embodiment, the first air flow channel is positioned proximate to a top of the testing device, and the second air flow channel is positioned proximate to a bottom of the testing device; or
the first air flow channel and the second air flow channel both are positioned proximate to the top of the testing device.

In an embodiment, the air flow channel is equipped with a flow control member, configured to open or close the air flow channel or regulate an opening degree of the air flow channel during the air flowing through.

In an embodiment, the flow control member is rotatably connected to the air flow channel, the air flow channel is equipped with a stop structure, and the flow control member is detachably abutted against the stop structure.

In an embodiment, the flow control member includes a plurality of flow control plates, the plurality of flow control plates each are rotatably connected to the air flow channel, each flow control plate partially overlaps its adjacent next flow control plate, an innermost flow control plate is detachably abutted against the stop structure.

In an embodiment, a rotation reset structure is provided between the flow control member and the air flow channel, and the rotation reset structure is configured to reset the flow control member to close the air flow channel.

In an embodiment, the rotation reset structure is a rotation shaft, a rotation axis of the rotation shaft extends in a horizontal direction and is located above a center of gravity of the flow control member; or
the rotation reset structure is an elastic reset structure applying an elastic force that drives the flow control member to close the air flow channel.

In an embodiment, the air flow channel is equipped with a flow control member, configured to open or close the air flow channel or regulate an opening degree of the air flow channel during the air flowing through;
the first air flow channel and the second air flow channel each are equipped with the flow control member, and an opening direction of the flow control member at the first air flow channel is opposite to that at the second air flow channel.

In an embodiment, the air flow channel is equipped with a fan for providing power for the air to flow.

In an embodiment, at least one of the first air flow channel or the second air flow channel is equipped with a fan for providing power for the air to flow.

In an embodiment, the testing device is equipped with an external heat exchange channel for heat exchange between the testing device and a surrounding environment.

In an embodiment, the external heat exchange channel includes an external air inflow channel and an external air outflow channel, the external air inflow channel is configured to allow ambient air outside the testing device to flow into the testing device; and the external air outflow channel is configured to allow an air inside the testing device to flow out of the testing device.

In an embodiment, the external air inflow channel is arranged at one of the indoor unit chamber, the first outdoor unit chamber, and the second outdoor unit chamber; and the external air outflow channel is arranged at one of the indoor unit chamber, the first outdoor unit chamber, and the second outdoor unit chamber.

In an embodiment, the external air inflow channel is arranged at the second outdoor unit chamber; and the external air outflow channel is arranged at the second outdoor unit chamber.

In an embodiment, the external air inflow channel is positioned proximate to a bottom of the second outdoor unit chamber; and the external air outflow channel is positioned proximate to a top of the second outdoor unit chamber.

In an embodiment, the external air outflow channel is equipped with a fan for driving the air in the second outdoor unit chamber to flow out of the testing device.

In an embodiment, a heat exchange apparatus for air heating or air cooling is provided inside one of the indoor unit chamber, the first outdoor unit chamber, and the second outdoor unit chamber.

In an embodiment, a first partition is arranged between the indoor unit chamber and the first outdoor unit chamber, the first partition is equipped with a first installation frame, the first heat exchanger is fixed at the first installation frame; and/or
a second partition is arranged between the indoor unit chamber and the second outdoor unit chamber, the second partition is equipped with a second installation frame, the second heat exchanger is fixed at the second installation frame.

In an embodiment, the testing device is provided with a refrigerant outlet for discharging a refrigerant leaking from one or more of the first heat exchanger, the second heat exchanger, the first outdoor unit, or the second outdoor unit.

In an embodiment, the indoor unit chamber is set to be at a temperature of 16°C to 32°C; and/or the first outdoor unit chamber is set to be at a temperature of -35°C to 10°C; and/or the second outdoor unit chamber is set to be at a temperature of 25°C to 65°C.

According to the above technical solutions, in the testing device for an air conditioner provided in embodiments of the present invention, the first heat exchanger cooperates with the first outdoor unit for heating, i.e., the first heat exchanger and the first outdoor unit together allows for heat transfer from the first outdoor unit chamber to the indoor unit chamber, that is to say, the first heat exchanger increases the temperature in the indoor unit chamber, while the first outdoor unit decreases the temperature in the first outdoor unit chamber, such that the first outdoor unit can cool down the first outdoor unit chamber, providing a low-temperature environment for the first outdoor unit itself. In this way, by transferring heat from the first outdoor unit chamber to the indoor unit chamber, the heat transferred from the first outdoor unit chamber to the indoor unit chamber can be utilized to provide the low-temperature environment for the first outdoor unit, allowing for low-temperature testing of the first outdoor unit, thereby reducing or even avoiding energy consumption associated with cooling the first outdoor unit chamber using an external air conditioning system.

Similarly, the second heat exchanger cooperates with the second outdoor unit for cooling, i.e., the second heat exchanger and the second outdoor unit together allows for heat transfer from the indoor unit chamber to the second outdoor unit chamber, that is to say, the second heat exchanger decreases the temperature in the indoor unit chamber, while the second outdoor unit increases the temperature in the second outdoor unit chamber, such that the second outdoor unit can heat up the second outdoor unit chamber, providing a high-temperature environment for the second outdoor unit itself. In this way, by transferring heat from the indoor unit chamber to the second outdoor unit chamber, the heat transferred from the indoor unit chamber to the second outdoor unit chamber can be utilized to provide the high-temperature environment for the second outdoor unit, allowing for high-temperature testing of the second outdoor unit, thereby reducing or even avoiding energy consumption associated with heating the second outdoor unit chamber using an external air conditioning system.

In addition, with the heat transfer channel, it is achievable to transfer the heat mutually between the two of the indoor unit chamber, the first outdoor unit chamber, and the second outdoor unit chamber, or transfer the heat from one to another, thereby balancing the temperature inside any one of the indoor unit chamber, the first outdoor unit chamber, and the second outdoor unit chamber, which is conducive to avoiding the indoor unit chamber from an excessive high or low temperature, or avoiding the first outdoor unit chamber from an excessive low temperature, or avoiding the second outdoor unit chamber from an excessive high temperature. Therefore, it is beneficial to conduct long-term testing on the first outdoor unit and the second outdoor unit and improve reliability for the testing device for an air conditioner.

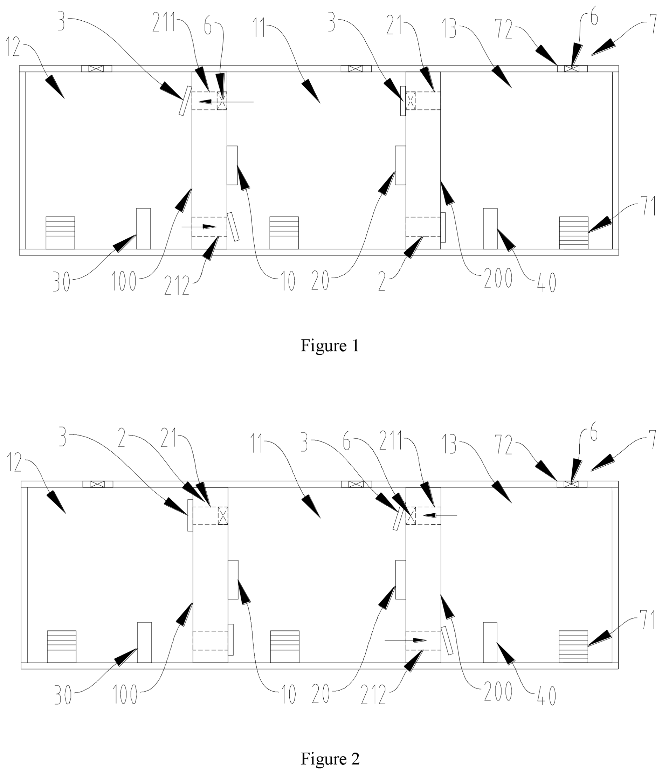

According to some embodiments of the present invention, there is provided a testing device for an air conditioner. Referring to what is shown in Figures 1 to 3, the testing device of an air conditioner includes an indoor unit chamber 11, a first outdoor unit chamber 12, and a second outdoor unit chamber 13. The indoor unit chamber 11 is equipped with a first heat exchanger 10 and a second heat exchanger 20. The first outdoor unit chamber 12 is equipped with a first outdoor unit 30. The second outdoor unit chamber 13 is equipped with a second outdoor unit 40. The first heat exchanger 10 cooperates with the first outdoor unit 30 for heating the indoor unit chamber 11, and the second heat exchanger 20 cooperates with the second outdoor unit 40 for cooling the indoor unit chamber 11.

A heat transfer channel 2 is arranged between two of the indoor unit chamber 11, the first outdoor unit chamber 12, and the second outdoor unit chamber 13, allowing heat to be transferred mutually between the two of the indoor unit chamber 11, the first outdoor unit chamber 12, and the second outdoor unit chamber 13, or allowing heat to be transferred from one to another.

According to the above technical solutions, in the testing device for an air conditioner provided in embodiments of the present invention, the first heat exchanger 10 cooperates with the first outdoor unit 30 for heating, i.e., the first heat exchanger 10 and the first outdoor unit 30 together allows for heat transfer from the first outdoor unit chamber 12 to the indoor unit chamber 11, that is to say, the first heat exchanger 10 increases the temperature in the indoor unit chamber 11, while the first outdoor unit 30 decreases the temperature in the first outdoor unit chamber 12, such that the first outdoor unit 30 can cool down the first outdoor unit chamber 12, providing a low-temperature environment for the first outdoor unit 30 itself. In this way, by transferring heat from the first outdoor unit chamber 12 to the indoor unit chamber 11, the heat transferred from the first outdoor unit chamber 12 to the indoor unit chamber 11 can be utilized to provide the low-temperature environment for the first outdoor unit 30, allowing for low-temperature testing of the first outdoor unit 30, thereby reducing or even avoiding energy consumption associated with cooling the first outdoor unit chamber 12 using an external air conditioning system.

Similarly, the second heat exchanger 20 cooperates with the second outdoor unit 40 for cooling, i.e., the second heat exchanger 20 and the second outdoor unit 40 together allows for heat transfer from the indoor unit chamber 11 to the second outdoor unit chamber 13, that is to say, the second heat exchanger 20 decreases the temperature in the indoor unit chamber 11, while the second outdoor unit 40 increases the temperature in the second outdoor unit chamber 13, such that the second outdoor unit 40 can heat up the second outdoor unit chamber 13, providing a high-temperature environment for the second outdoor unit 40 itself. In this way, by transferring heat from the indoor unit chamber 11 to the second outdoor unit chamber 13, the heat transferred from the indoor unit chamber 11 to the second outdoor unit chamber 13 can be utilized to provide the high-temperature environment for the second outdoor unit 40, allowing for high-temperature testing of the second outdoor unit 40, thereby reducing or even avoiding energy consumption associated with heating the second outdoor unit chamber 13 using an external air conditioning system. Here, respective heats in the indoor unit chamber 11, the first outdoor unit chamber 12, and the second outdoor unit chamber 13 can be understood as including at least the internal energy stored in respective air contained.

In addition, with the heat transfer channel 2, it is achievable to transfer the heat mutually between the two of the indoor unit chamber 11, the first outdoor unit chamber 12, and the second outdoor unit chamber 13, or transfer the heat from one to another, thereby balancing the temperature inside any one of the indoor unit chamber 11, the first outdoor unit chamber 12, and the second outdoor unit chamber 13, which is conducive to avoiding the indoor unit chamber 11 from an excessive high or low temperature, or avoiding the first outdoor unit chamber 12 from an excessive low temperature, or avoiding the second outdoor unit chamber 13 from an excessive high temperature. Therefore, it is beneficial to conduct long-term testing on the first outdoor unit 30 and the second outdoor unit 40, and to improve the reliability of the testing device for an air conditioner.

In some embodiments, referring to what is shown in Figures 1 to 3, the first heat exchanger 10 and the second heat exchanger 20 may be arranged in separate indoor units respectively, that is, the first heat exchanger 10 and the second heat exchanger 20 are arranged apart, where the first heat exchanger 10 may be arranged in a first indoor unit, while the second heat exchanger 20 may be arranged in a second indoor unit, at this time, the first indoor unit cooperates with the first outdoor unit 30 for heating, the second indoor unit cooperates with the second outdoor unit 40 for cooling. Alternatively, in other embodiments, the first heat exchanger 10 and the second heat exchanger 20 may be arranged integrally, for example, the first heat exchanger 10 and the second heat exchanger 20 may be arranged integrally into a casing of one indoor unit, with the first heat exchanger 10 and the second heat exchanger 20 separated apart for independent heat exchange.

It should be noted that the heat transfer channel 2 is configured to allow heat to be transferred mutually between two of the indoor unit chamber 11, the first outdoor unit chamber 12, and the second outdoor unit chamber 13. It would be understood that heat is transferred mutually between the indoor unit chamber 11 and the first outdoor unit chamber 12 through the heat transfer channel 2; or heat is transferred mutually between the indoor unit chamber 11 and the second outdoor unit chamber 13 through the heat transfer channel 2; or heat is transferred mutually between the first outdoor unit chamber 12 and the second outdoor unit chamber 13 through the heat transfer channel 2.

Alternatively, the heat transfer channel 2 is configured to allow heat transfer from one to another of the indoor unit chamber 11, the first outdoor unit chamber 12, and the second outdoor unit chamber 13. It would be understood that heat is transferred from the indoor unit chamber 11 to the first outdoor unit chamber 12 through the heat transfer channel 2; or heat is transferred from the indoor unit chamber 11 to the second outdoor unit chamber 13 through the heat transfer channel 2; or heat is transferred from the first outdoor unit chamber 12 to the indoor unit chamber 11 through the heat transfer channel 2; or heat is transferred from the second outdoor unit chamber 13 to the indoor unit chamber 11 through the heat transfer channel 2; or heat is transferred from the first outdoor unit chamber 12 to the second outdoor unit chamber 13 through the heat transfer channel 2; or heat is transferred from the second outdoor unit chamber 13 to the first outdoor unit chamber 12 through the heat transfer channel 2.

In some embodiments of the present invention, referring to what is shown in Figures 1 to 3, the first outdoor unit chamber 12, the indoor unit chamber 11, and the second outdoor unit chamber 13 may be sequentially arranged in a straight line along a predetermined direction, thereby facilitating installation and arrangement of the first outdoor unit chamber 12, the indoor unit chamber 11 and the second outdoor unit chamber 13, and installation of the first heat exchanger 10 and the second heat exchanger 20. In addition, such a straight-line layout is also conducive to arranging the testing device for an air conditioner in a narrow installation space.

In some embodiments of the present invention, the first heat exchanger 10 and the first outdoor unit 30 are worked together to form a first unit under test (UUT), i.e., the first heat exchanger 10 and the first outdoor unit 30 are tested as a whole as a UUT, such that the testing device for an air conditioner can perform the low-temperature testing on the first UUT; and the second heat exchanger 20 and the second outdoor unit 40 are worked together to form a second UUT, i.e., the second heat exchanger 20 and the second outdoor unit 40 are tested as a whole as another UUT, such that the testing device for an air conditioner can perform the high-temperature testing on the second UUT. Therefore, the testing device for an air conditioner can test reliability of the first UUT in a low-temperature and long-term operation, reduce testing time consumed before delivery for the first UUT, and can test reliability of the second UUT in a high-temperature and long-term operation, reduce testing time consumed before delivery for the second UUT.

In some embodiments of the present invention, referring to what is shown in Figures 1 to 3, the heat transfer channel 2 may include an air flow channel 21 for connecting, i.e., providing fluid communication between, the two of the indoor unit chamber 11, the first outdoor unit chamber 12, and the second outdoor unit chamber 13. In this way, the air flow channel 21 allows an air to flow mutually between the two of the indoor unit chamber 11, the first outdoor unit chamber 12, and the second outdoor unit chamber 13, or allows an air to flow from one to another of the indoor unit chamber 11, the first outdoor unit chamber 12, and the second outdoor unit chamber 13, thereby achieving the heat transfer by the air flow which improves efficiency of the heat transfer. Alternatively, in some other embodiments, the heat transfer channel 2 is further provided with a heat exchange medium, which may be made of a medium with good thermal conductivity, thereby achieving rapid heat transfer. In addition, the heat exchange medium may be of a unidirectional thermal conduction capability or may arranged in a structure with unidirectional thermal conduction function, to achieve unidirectional heat transfer. The present invention does not impose extensive limitations on this aspect.

In some embodiments of the present invention, referring to what is shown in Figures 1 to 3, the air flow channel 21 may connect the indoor unit chamber 11 and the first outdoor unit chamber 12, where the air flow channel 21 may include a first air flow channel 211 and a second air flow channel 212, the first air flow channel 211 is configured to allow an air in the indoor unit chamber 11 to flow into the first outdoor unit chamber 12, thereby increasing the temperature in the first outdoor unit chamber 12 when the air in the indoor unit chamber 11 flows into the first outdoor unit chamber 12, thus avoiding the first outdoor unit chamber from an excessive low temperature. The second air flow channel 212 is configured to allow an air in the first outdoor unit chamber 12 to flow into the indoor unit chamber 11, thereby decreasing the temperature in the indoor unit chamber 11 when the air in the first outdoor unit chamber 12 flows into the indoor unit chamber 11, thus avoiding the indoor unit chamber 11 from an excessive high temperature. Alternatively, when the air flow channel 21 connects the indoor unit chamber 11 and the first outdoor unit chamber 12, it is also possible to include only the first air flow channel 211 or the second air flow channel 212.

In some embodiments of the present invention, referring to what is shown in Figure 1 and Figure 2, the air flow channel 21 may connect the indoor unit chamber 11 and the second outdoor unit chamber 13, where the air flow channel 21 may include a first air flow channel 211 and a second air flow channel 212, the first air flow channel 211 is configured to allow an air in the second outdoor unit chamber 13 to flow into the indoor unit chamber 11, thereby increasing the temperature in the indoor unit chamber 11 when the air in the second outdoor unit chamber 13 flows into the indoor unit chamber 11, thus avoiding the indoor unit chamber 11 from an excessive low temperature. The second air flow channel 212 is configured to allow an air in the indoor unit chamber 11 to flow into the second outdoor unit chamber 13, thereby decreasing the temperature in the second outdoor unit chamber 13 when the air in the indoor unit chamber 11 flow into the second outdoor unit chamber 13, thus avoiding the second outdoor unit chamber 13 from an excessive high temperature. Alternatively, when the air flow channel 21 connects the indoor unit chamber 11 and the second outdoor unit chamber 13, it is also possible to include only the first air flow channel 211 or the second air flow channel 212.

In some embodiments of the present invention, the air flow channel 21 may connect the first outdoor unit chamber 12 and the second outdoor unit chamber 13, where the air flow channel 21 may include a first air flow channel 211 and a second air flow channel 212, the first air flow channel 211 is configured to allow an air in the second outdoor unit chamber 13 to flow into the first outdoor unit chamber 12, thereby increasing the temperature in the first outdoor unit chamber 12 when the air in the second outdoor unit chamber 13 flows into the first outdoor unit chamber 12, thus avoiding the first outdoor unit chamber 12 from an excessive low temperature. The second air flow channel 212 is configured to allow an air in the first outdoor unit chamber 12 to flow into the second outdoor unit chamber 13, thereby decreasing the temperature in the second outdoor unit chamber 13 when the air in the first outdoor unit chamber 12 flows into the second outdoor unit chamber 13, thus avoiding the second outdoor unit chamber 13 from an excessive high temperature. Alternatively, when the air flow channel 21 connects the first outdoor unit chamber 12 and the second outdoor unit chamber 13, it is also possible to include only the first air flow channel 211 or the second air flow channel 212.

In some embodiments, the first air flow channel 211 and the second air flow channel 212 are used as a one-way flow channel.

In some embodiments, in the embodiment where the air flow channel 21 includes the first air flow channel 211 and the second air flow channel 212, referring to what is shown in Figure 1 and Figure 2, the first air flow channel 211 may be positioned proximate to a top of the testing device, and the second air flow channel 212 may be positioned proximate to a bottom of the testing device. Here, as the first air flow channel 211 is to introduce a higher-temperature air into a lower-temperature air, based on a characteristic that the higher-temperature air normally raises upwards, arranging the first air flow channel 211 at a higher position facilitates the introduction of the higher-temperature air into the lower-temperature air. Similarly, based on a characteristic that the lower-temperature air normally sinks downwards, arranging the second air flow channel 212 at a lower position facilitates the introduction of the lower-temperature air to the higher-temperature air.

Alternatively, in other embodiments, the first air flow channel 211 and the second air flow channel 212 both may be positioned proximate to the top of the testing device, thereby preventing the first air flow channel 211 and the second air flow channel 212 from being obstructed by other components, and allowing for a compact arrangement of the first air flow channel 211 and the second air flow channel 212.

In some embodiments of the present invention, referring to what is shown in Figure 1 and Figure 2, the air flow channel 21 may be equipped with a flow control member 3, configured to open or close the air flow channel 21 or regulate an opening degree of the air flow channel 21 during the air flowing through, such that the flow control member 3 opens the air flow channel 21 when it is required to perform heat exchange through the air flow channel 21, thereby modulating efficiency of the heat exchange by adjusting the opening degree of the air flow channel 21, with increased efficiency of the heat exchange when enlarging the opening degree of the air flow channel 21, while with decreased efficiency of the heat exchange when reducing the opening degree of the air flow channel 21, thus achieving flexible modulation of the efficiency of the heat exchange. Accordingly, the flow control member 3 may close the air flow channel 21 when it is required to stop heat exchange through the air flow channel 21, thereby improving reliability of the testing device for an air conditioner.

In some embodiments of the present invention, referring to what is shown in Figure 1, Figure 2, and Figures 6 to 10, the flow control member 3 may be rotatably connected to the air flow channel 21, that is, the flow control member 3 may open or close the air flow channel 21 in a rotation manner. Here, the air flow channel 21 may be equipped with a stop structure 4, and the flow control member 3 is detachably abutted against the stop structure 4, where the flow control member 3 is in an opening position that opens the air flow channel 21 when the flow control member 3 is detached from or spaced apart from the stop structure 4; while the flow control member 3 is in a close position that closes the air flow channel 21 when the flow control member 3 is abutted against the stop structure 4, at this moment, as the flow control member 3 is abutted against the stop structure 4, the stop structure 4 limits the flow control member 3 from rotating in an opposite direction that would open the air flow channel 21, thereby achieving self-lock of the flow control member 3. When at least one of the first air flow channel 211 or the second air flow channel 212 is equipped with the flow control member 3 and the stop structure 4, it ensures that both the first air flow channel 211 and the second air flow channel 212 function as the one-way flow channels.

It should be noted that when the flow control member 3 is rotated clockwise to open the air flow channel 21, the "opposite direction" above described refers to the counterclockwise rotation. Conversely, when the flow control member 3 is rotated counterclockwise to open the air flow channel 21, the "opposite direction" then refers to the clockwise rotation.

In some embodiments of the present invention, referring to what is shown in Figure 1, Figure 2, and Figures 6 to 10, the flow control member 3 may include a plurality of flow control plates 31, the plurality of flow control plates 31 each are rotatably connected to the air flow channel 21, each flow control plate 31 partially overlaps its adjacent next flow control plate 31, thus enhancing a flow area of the air flow channel 21 when the plurality of flow control plates 31 open the air flow channel 21 simultaneously, where an innermost flow control plate 31 is detachably abutted against the stop structure 4, such that when the plurality of flow control plates 31 close the air flow channel 21, each flow control plate partially overlaps its adjacent next flow control plate, and the innermost flow control plate 31 is detachably abutted against the stop structure 4, thereby preventing the plurality of flow control plates 31 from rotating in the opposite direction that would open the air flow channel 21.

It would be noted that the innermost flow control plate 31 may be understood as the last flow control plate 31 among the plurality of flow control plates 31 that partially overlap one by one.

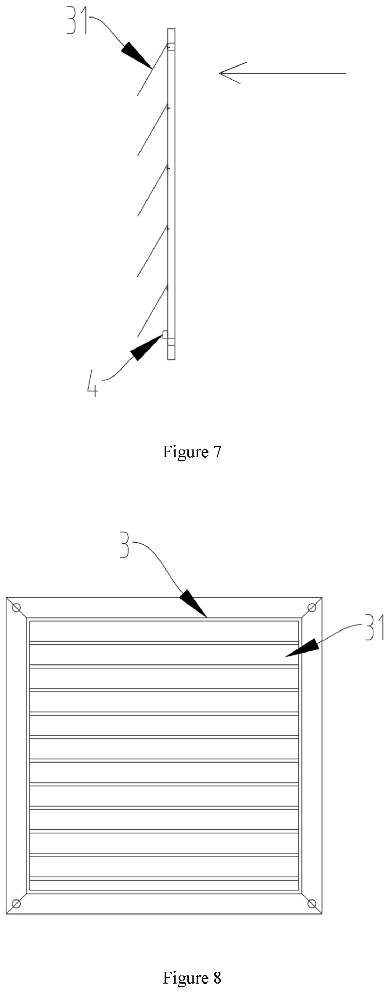

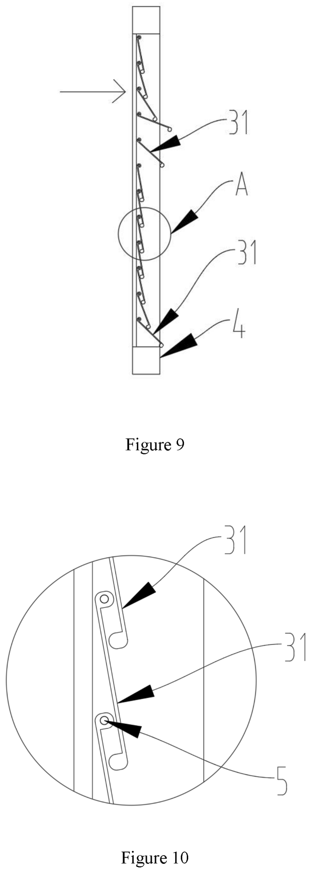

In some embodiments, referring to what is shown in Figure 7, the stop structure 4 may be configured as a stop protrusion. Alternatively, referring to what is shown in Figure 9, the stop structure 4 may be configured as a protruding portion extending from the air flow channel 21. The present invention does not impose extensive limitations on this configuration.

In some embodiments of the present invention, referring to what is shown in Figure 10, a rotation reset structure 5 is provided between the flow control member 3 and the air flow channel 21, and the rotation reset structure 5 is configured to reset the flow control member 3 to close the air flow channel 21. In other words, when the flow control member 3 opens the air flow channel 21, the rotation reset structure 5 may store a reset force, when it is required to close the air flow channel 21, the rotation reset structure 5 may reset the flow control member 3 to close the air flow channel 21 under the reset force, thus achieving reliable close of the air flow channel 21 by the flow control member 3.

In some embodiments, referring to what is shown in Figure 10, the rotation reset structure 5 may be configured as a rotation shaft, a rotation axis of the rotation shaft extends in a horizontal direction and is located above a center of gravity of the flow control member 3, such that when the flow control member 3 opens the air flow channel 21, partial gravity of the flow control member 3 may be converted to the above described reset force through the rotation shaft, thus facilitating self-reset of the flow control member 3 under cooperation between the rotation shaft and the gravity of the flow control member 3.

In some other embodiments, the rotation reset structure 5 may also be configured as an elastic reset structure applying an elastic force that drives the flow control member 3 to close the air flow channel 21. In other words, when the flow control member 3 opens the air flow channel 21, the elastic reset structure may store the above described elastic force that achieves self-reset of the flow control member 3. Specifically, the elastic reset structure may be configured as a torsional spring, adapted to the rotation of the flow control member 3. Alternatively, the elastic reset structure may also be configured as a tension spring.

In some embodiments of the present invention, referring to what is shown in Figure 1 and Figure 2, the air flow channel 21 is equipped with a flow control member 3, the flow control member 3 is configured to open or close the air flow channel 21 or regulate an opening degree of the air flow channel 21 during the air flowing through, where the first air flow channel 211 and the second air flow channel 212 each are equipped with the flow control member 3, and an opening direction of the flow control member 3 at the first air flow channel 211 is opposite to an opening direction of the flow control member 3 at the second air flow channel 212. Here, as the first air flow channel 211 and the second air flow channel 212 both are used as a one-way flow channel with opposite flow directions, the opening direction of the flow control member 3 at the first air flow channel 211 is opposite to the opening direction of the flow control member 3 at the second air flow channel 212, thereby on one hand adapting to respective air flows, and on the other hand achieving self-lock of respective flow control members 3. For example, when the flow control member 3 is abutted against the stop structure 4, the flow control member 3 is prevented from rotating in the opposite direction which would unintentionally open the first air flow channel 211 or the second air flow channel 212.

Accordingly, when one heat transfer channel 2 is arranged between the indoor unit chamber 11 and the first outdoor unit chamber 12, and another heat transfer channel 2 is arranged between the indoor unit chamber 11 and the second outdoor unit chamber 13 as well, such an arrangement achieves that one heat transfer channel 2 is open for heat exchange, while another heat transfer channel 2 is close to stop heat exchange. In specific, when the heat is transferred between the indoor unit chamber 11 and the first outdoor unit chamber 12 through one heat transfer channel 2 therebetween, another heat transfer channel 2 between the indoor unit chamber 11 and the second outdoor unit chamber 13 is close to stop heat exchange, thereby avoiding from influencing the temperature in the second outdoor unit chamber 13 and thus ensuring the testing of the second outdoor unit 40. Similarly, when the heat is transferred between the indoor unit chamber 11 and the second outdoor unit chamber 13 through the another heat transfer channel 2 therebetween, the one heat transfer channel 2 between the indoor unit chamber 11 and the first outdoor unit chamber 12 is close to stop heat exchange, thereby avoiding from influencing the temperature in the first outdoor unit chamber 12 and thus ensuring the testing of the first outdoor unit 30. Therefore, the testing device is further improved for its reliability. Specifically, the flow control member 3 may be rotatably connected to the first air flow channel 211 or the second air flow channel 212.

In some embodiments of the present invention, referring to what is shown in Figures 1 to 3, the air flow channel 21 may be equipped with a fan 6 for providing power for the air to flow, such that the rotation of the fan 6 may be utilized to drive the air to flow, thus improving the reliability and efficiency of the heat exchange. Specifically, when the air flow channel 21 is equipped with the flow control member 3 and the rotation reset structure 5 is configured as the rotation shaft, the fan 6 is activated, at this moment, the fan 6 may drive the air to flow, which pushes the flow control member 3 to open the air flow channel 21. Accordingly, when the fan 6 is deactivated, the flow control member 3 may be reset under its own gravity to close the air flow channel 21.

In some embodiments of the present invention, referring to what is shown in Figures 1 to 3, at least one of the first air flow channel 211 or the second air flow channel 212 is equipped with the fan 6 for providing power for the air to flow, such that the rotation of the fan 6 may be utilized to drive the air to flow, thus improving the reliability of the heat exchange. In specific, in some embodiments, the first air flow channel 211 may be equipped with the fan 6, while the second air flow channel 212 may omit installation of the fan 6; alternatively, the second air flow channel 212 may be equipped with the fan 6, while the first air flow channel 211 may omit installation of the fan 6; alternatively, the first air flow channel 211 and the second air flow channel 212 both may be equipped with the fan 6.

Next, the specific operation process of the air flow channel 21 will be further described with reference to the aforementioned specific embodiments. Referring to what is shown in Figures 1 to 10, in the embodiment where the air flow channel 21 connects the indoor unit chamber 11 and the first outdoor unit chamber 12, and includes the first air flow channel 211 and the second air flow channel 212, when it is required to perform the heat exchange mutually between the indoor unit chamber 11 and the first outdoor unit chamber 12, the fan 6 for the first air flow channel 211 is activated, pushing the plurality of flow control plates 31 equipped at the first air flow channel 211, to open the first air flow channel 211, allowing the air in the indoor unit chamber 11 to flow into the first outdoor unit chamber 12; afterwards, the air in the first outdoor unit chamber 12 becomes positively pressurized, which in turn pushes the plurality of flow control plates 31 equipped at the second air flow channel 212, to open the second air flow channel 212, allowing the air in the first outdoor unit chamber 12 to flow into the indoor unit chamber 11, at this moment, the heat exchange is achieved mutually between the indoor unit chamber 11 and the first outdoor unit chamber 12. Besides, because the air in the indoor unit chamber 11 flows into the first outdoor unit chamber 12 while the air in the first outdoor unit chamber 12 simultaneously flows into the indoor unit chamber 11, such a configuration also achieves a balanced air pressure of the indoor unit chamber 11 and a balanced air pressure of the first outdoor unit chamber 12. When it is required to stop the heat exchange mutually between the indoor unit chamber 11 and the first outdoor unit chamber 12, the fan 6 is deactivated, such that the rotation shaft converts the gravity of the flow control plate 31 to the reset force, enabling the plurality of flow control plates 31 to automatically reset to close the first air flow channel 211 or the second air flow channel 212, and further, the arrangement of the stop structure 4 achieves self-lock of the flow control plate 31.

Similarly, referring to what is shown in Figures 1 to 10, in the embodiment where the air flow channel 21 connects the indoor unit chamber 11 and the second outdoor unit chamber 13, and includes the first air flow channel 211 and the second air flow channel 212, when it is required to perform the heat exchange mutually between the indoor unit chamber 11 and the second outdoor unit chamber 13, the fan 6 for the first air flow channel 211 is activated, pushing the plurality of flow control plates 31 equipped at the first air flow channel 211, to open the first air flow channel 211, allowing the air in the second outdoor unit chamber 13 to flow into the indoor unit chamber 11; afterwards, the air in the indoor unit chamber 11 becomes positively pressurized, which in turn pushes the plurality of flow control plates 31 equipped at the second air flow channel 212, to open the second air flow channel 212, allowing the air in the indoor unit chamber 11 to flow into the second outdoor unit chamber 13, at this moment, the heat exchange is achieved mutually between the indoor unit chamber 11 and the second outdoor unit chamber 13. Besides, because the air in the indoor unit chamber 11 flows into the second outdoor unit chamber 13 while the air in the second outdoor unit chamber 13 simultaneously flows into the indoor unit chamber 11, such a configuration also achieves a balanced air pressure of the indoor unit chamber 11 and a balanced air pressure of the second outdoor unit chamber 13. When it is required to stop the heat exchange mutually between the indoor unit chamber 11 and the second outdoor unit chamber 13, the fan 6 is deactivated, such that the rotation shaft converts the gravity of the flow control plate 31 to the reset force, enabling the plurality of flow control plates 31 to automatically reset to close the first air flow channel 211 or the second air flow channel 212, and further, the arrangement of the stop structure 4 achieves self-lock of the flow control plate 31.

Similarly, referring to what is shown in Figures 1 to 10, in the embodiment where the air flow channel 21 connects the first outdoor unit chamber 12 and the second outdoor unit chamber 13, and includes the first air flow channel 211 and the second air flow channel 212, when it is required to perform the heat exchange mutually between the first outdoor unit chamber 12 and the second outdoor unit chamber 13, the fan 6 for the first air flow channel 211 is activated, pushing the plurality of flow control plates 31 equipped at the first air flow channel 211, to open the first air flow channel 211, allowing the air in the second outdoor unit chamber 13 to flow into the first outdoor unit chamber 12; afterwards, the air in the first outdoor unit chamber 12 becomes positively pressurized, which in turn pushes the plurality of flow control plates 31 equipped at the second air flow channel 212, to open the second air flow channel 212, allowing the air in the first outdoor unit chamber 12 to flow into the second outdoor unit chamber 13, at this moment, the heat exchange is achieved mutually between the first outdoor unit chamber 12 and the second outdoor unit chamber 13. Besides, because the air in the second outdoor unit chamber 13 flows into the first outdoor unit chamber 12 while the first outdoor unit chamber 12 simultaneously flows into the second outdoor unit chamber 13, such a configuration also achieves a balanced air pressure of the first outdoor unit chamber 12 and a balanced air pressure of the second outdoor unit chamber 13. When it is required to stop the heat exchange mutually between the first outdoor unit chamber 12 and the second outdoor unit chamber 13, the fan 6 is deactivated, such that the rotation shaft converts the gravity of the flow control plate 31 to the reset force, enabling the plurality of flow control plates 31 to automatically reset to close the first air flow channel 211 or the second air flow channel 212, and further, the arrangement of the stop structure 4 achieves self-lock of the flow control plate 31.

In some embodiments of the present invention, referring to what is shown in Figures 1 to 3, the testing device may be further equipped with an external heat exchange channel 7, enabling heat exchange between the testing device and a surrounding environment. In this way, by means of heat exchange between the testing device and the surrounding environment, it is convenient to adjust respective temperatures of the indoor unit chamber 11, the first outdoor unit chamber 12, and the second outdoor unit chamber 13 in the testing device.

In some embodiments, referring to what is shown in Figures 1 to 3, the external heat exchange channel 7 may include an external air inflow channel 71 and an external air outflow channel 72, the external air inflow channel 71 is configured to allow an ambient air outside the testing device to flow into the testing device, e.g., into the indoor unit chamber 11, the first outdoor unit chamber 12, or the second outdoor unit chamber 13 in the testing device; and the external air outflow channel 72 is configured to allow an air inside the testing device to flow out of the testing device, e.g., out of the indoor unit chamber 11, the first outdoor unit chamber 12, or the second outdoor unit chamber 13 in the testing device. Therefore, by means of the heat exchange between the testing device and the surrounding environment, it is possible to avoid the indoor unit chamber 11 from an excessively high or low temperature, or avoid the first outdoor unit chamber 12 from an excessive low temperature, or avoid the second outdoor unit chamber 13 from an excessively high temperature. Besides, the provision of the external air inflow channel 71 and the external air outflow channel 72 ensures a balanced air pressure of the testing device, thus avoiding the air pressure fluctuations. In some other embodiments, the external heat exchange channel 7 may also include the external air inflow channel 71 alone, configured to allow the ambient air outside the testing device to flow into the testing device. In this way, the ambient air outside the testing device is mixed with the air inside the testing device, thereby adjusting the temperature inside the testing device.

In some embodiments of the present invention, referring to what is shown in Figures 1 to 3, the external air inflow channel 71 may be arranged at one of the indoor unit chamber 11, the first outdoor unit chamber 12, and the second outdoor unit chamber 13; and the external air outflow channel 72 may be arranged at one of the indoor unit chamber 11, the first outdoor unit chamber 12, and the second outdoor unit chamber 13. In this way, when it is required to decrease or increase the temperature in the indoor unit chamber 11, the external air inflow channel 71 may be arranged at the indoor unit chamber 11; while the external air outflow channel 72 may be arranged at any one of the indoor unit chamber 11, the first outdoor unit chamber 12, and the second outdoor unit chamber 13. Similarly, when it is required to increase the temperature in the first outdoor unit chamber 12, the external air inflow channel 71 may be arranged at the first outdoor unit chamber 12; while the external air outflow channel 72 may be arranged at any one of the indoor unit chamber 11, the first outdoor unit chamber 12, and the second outdoor unit chamber 13. Similarly, when it is required to decrease the temperature in the second outdoor unit chamber 13, the external air inflow channel 71 may be arranged at the second outdoor unit chamber 13; while the external air outflow channel 72 may be arranged at any one of the indoor unit chamber 11, the first outdoor unit chamber 12, and the second outdoor unit chamber 13. In some embodiments, an air valve may be arranged at the external air inflow channel 71, for opening or closing the external air inflow channel 71, thereby achieving flexible open/close of the external air inflow channel 71. Here, the principle of open/close the air valve is well known in the art, which will not be elaborated in the present invention.

In some embodiments, referring to what is shown in Figures 1 to 3, the external air inflow channel 71 may be provided at the second outdoor unit chamber 13; and the external air outflow channel 72 may be provided at the second outdoor unit chamber 13, thereby achieving rapid heat exchange between the second outdoor unit chamber 13 and the surrounding environment, e.g., the ambient atmosphere, thus reducing the temperature in the second outdoor unit chamber 13 rapidly.

In some embodiments, referring to what is shown in Figures 1 to 3, the external air inflow channel 71 is positioned proximate to a bottom of the second outdoor unit chamber 13; and the external air outflow channel 72 is positioned proximate to a top of the second outdoor unit chamber 13. Here, the second heat exchanger 20 cooperates with the second outdoor unit 40 for cooling, and the temperature in the second outdoor unit chamber 13 is normally high, i.e., higher than the temperature of the ambient air, therefore the arrangement of the external air inflow channel 71 at a lower position facilitates the ambient air at the lower temperature to flow into the second outdoor unit chamber 13; and similarly the arrangement of the external air outflow channel 72 at a higher position facilitates the air at a higher temperature in the second outdoor unit chamber 13 to be discharged automatically to the surrounding environment, e.g., the ambient atmosphere.

Alternatively, referring to what is shown in Figure 1, the external air outflow channel 72 may be equipped with a fan 6 for driving the air in the second outdoor unit chamber 13 to flow out of the testing device, thereby further improving the efficiency of the heat exchange between the second outdoor unit chamber 13 and the surrounding environment outside the testing device.

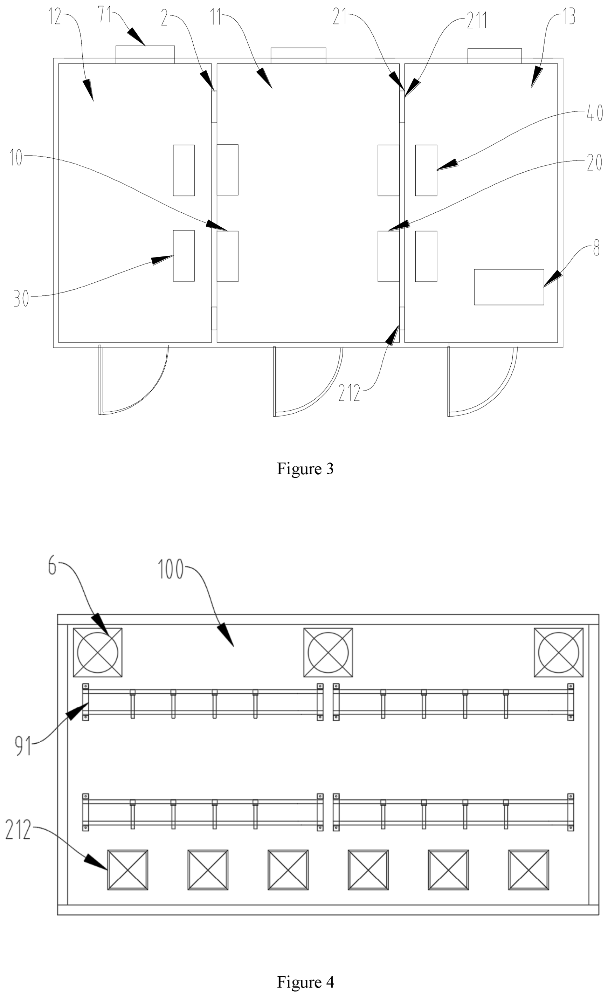

In some embodiments of the present invention, referring to what is shown in Figure 3, a heat exchange apparatus 8 for air heating or air cooling is provided inside one of the indoor unit chamber 11, the first outdoor unit chamber 12, and the second outdoor unit chamber 13, such that the air in the indoor unit chamber 11, the first outdoor unit chamber 12, or the second outdoor unit chamber 13 can be heated or cooled directly by the heat exchange apparatus 8, thereby avoiding the indoor unit chamber 11 from an excessive high or low temperature, or avoiding the first outdoor unit chamber 12 from an excessive low temperature, or avoiding the second outdoor unit chamber 13 from an excessive high temperature.

In some embodiments of the present invention, the heat exchange apparatus 8 may be configured as an air conditioning system, that is, the heat exchange apparatus 8 may blow a hot or cold air, to heat or cool the air in the indoor unit chamber 11 or the first outdoor unit chamber 12 or the second outdoor unit chamber 13. In specific, due to the use of the heat transfer channel 2 for heat exchange, the heat exchange apparatus 8 is not the one mainly responsible to provide the low-temperature environment for the first outdoor unit 30 or the high-temperature environment for the second outdoor unit 40, accordingly the arrangement of the heat exchange apparatus 8 can also reduce energy consumption for testing an air conditioner. Alternatively, in some other embodiments, the heat exchange apparatus 8 may also be provided with a heat exchange medium, which can be constructed as a medium with good thermal conductivity and a high specific heat capacity, thereby heating or cooling the air.

In some embodiments of the present invention, referring to what is shown in Figure 3, a first partition 100 is arranged between the indoor unit chamber 11 and the first outdoor unit chamber 12, the first partition 100 is equipped with a first installation frame 91, the first heat exchanger 10 is fixed at the first installation frame 91. Accordingly, it is convenient to mount the first heat exchanger 10 at the first partition 100. In this case, the first heat exchanger 10 may be configured as a heat exchanger for a wall-mounted unit. In some embodiments, when the testing device includes the first air flow channel 211 and the second air flow channel 212, and when the air flow channel 21 connects the indoor unit chamber 11 and the first outdoor unit chamber 12, the first air flow channel 211 and the second air flow channel 212 each may be arranged at the first partition 100 and extend through the first partition 100, to connect the indoor unit chamber 11 and the first outdoor unit chamber 12.

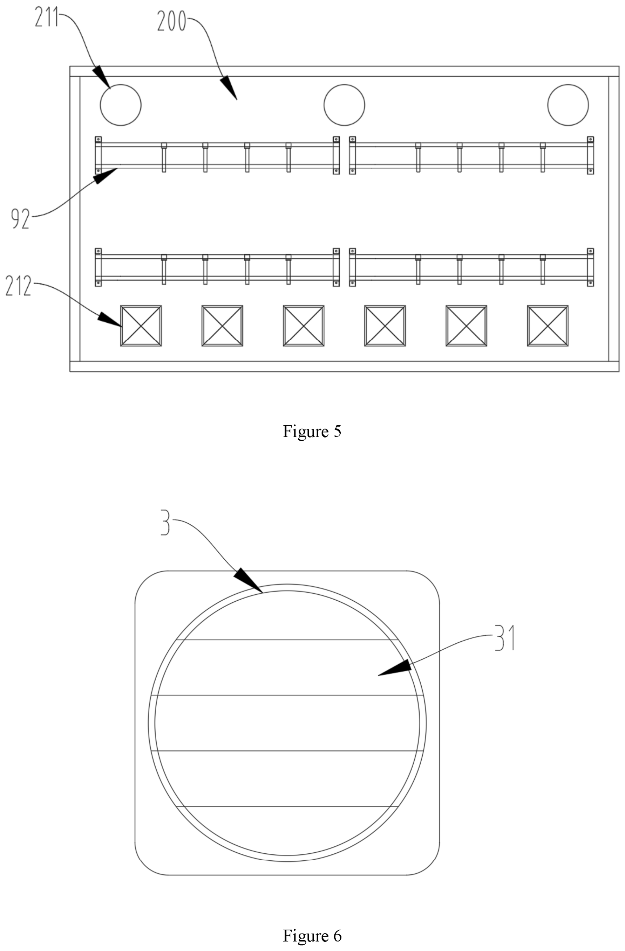

In some embodiments of the present invention, referring to what is shown in Figure 5, a second partition 200 is arranged between the indoor unit chamber 11 and the second outdoor unit chamber 13, the second partition 200 is equipped with a second installation frame 92, the second heat exchanger 20 is fixed at the second installation frame 92. Accordingly, it is convenient to mount the second heat exchanger 20 at the second partition 200. In this case, the second heat exchanger 20 may be configured as a heat exchanger for a wall-mounted unit. In some embodiments, when the testing device includes the first air flow channel 211 and the second air flow channel 212, and when the air flow channel 21 connects the indoor unit chamber 11 and the second outdoor unit chamber 13, the first air flow channel 211 and the second air flow channel 212 each may be arranged at the second partition 200 and extend through the second partition 200, to connect the indoor unit chamber 11 and the second outdoor unit chamber 13.

In some embodiments of the present invention, the testing device may be provided with a refrigerant outlet (not shown in drawings) for discharging a refrigerant leaking from one or more of the first heat exchanger 10, the second heat exchanger 20, the first outdoor unit 30, or the second outdoor unit 40, thereby avoiding refrigerant residue in the indoor unit chamber 11, the first outdoor unit chamber 12, or the second outdoor unit chamber 13, thus protecting the health of testing personnel. Besides, avoidance of refrigerant residue in the indoor unit chamber 11, the first outdoor unit chamber 12, or the second outdoor unit chamber 13 also provides an explosion-proof effect for the indoor unit chamber 11, the first outdoor unit chamber 12, or the second outdoor unit chamber 13, thus preventing accumulation of the refrigerant residue from reaching an explosive threshold in the indoor unit chamber 11, the first outdoor unit chamber 12, or the second outdoor unit chamber 13.

In some embodiments of the present invention, the indoor unit chamber 11 may be set at a temperature of 16°C to 32°C, for example, may be set at 23°C to 28°C, in particular, e.g., may be set at 24°C, 25°C, 26°C, 27°C, etc., that is, the indoor unit chamber 11 may be substantially configured as a normal temperature chamber.

In some embodiments of the present invention, the first outdoor unit chamber 12 is set at a temperature of -35°C to 10°C, for example, may be set at -16°C to -1°C, e.g., may be set at -15°C, -10°C, -5°C, etc., that is, the first outdoor unit chamber 12 may be substantially configured as a low-temperature chamber, to test the performance of the first outdoor unit 30 under this temperature range.

In some embodiments of the present invention, the second outdoor unit chamber 13 is set at a temperature of 25°C to 65°C, for example, may be set at 44°C to 56°C, e.g., may be set at 45°C, 50°C, 55°C, etc., that is, the second outdoor unit chamber 13 may be substantially configured as a high-temperature chamber, to test the performance of the second outdoor unit 40 under this temperature range.

In some embodiments of the present invention, an air-pressure balancing structure may be arranged in one of the indoor unit chamber 11, the first outdoor unit chamber 12, and the second outdoor unit chamber 13. The air-pressure balancing structure may include an air tank, an air intake structure connected to the air tank, and an air discharge structure. The air intake structure is configured to draw the air in the indoor unit chamber 11, the first outdoor unit chamber 12, or the second outdoor unit chamber 13 into the air tank, while the air discharge structure is configured to discharge the air in the air tank to the indoor unit chamber 11, the first outdoor unit chamber 12, or the second outdoor unit chamber 13, thereby facilitating to maintenance of the balanced air pressure of the indoor unit chamber 11, the first outdoor unit chamber 12, or the second outdoor unit chamber 13.

The specific embodiments of the present invention have been described in detail above with reference to the accompanying drawings. However, the present invention is not limited to the specific details of the aforementioned embodiments. Within the technical concept of the present invention, various simple modifications can be made to embodiments of the present invention, all of which shall fall within the protection scope of the present invention as defined by the appended claims.

It should also be noted that the various specific technical features described in the above detailed embodiments may be combined in any suitable manner without conflict. To avoid unnecessary repetition, the present invention will not separately enumerate all possible combinations.

Furthermore, various embodiments of the present invention may be combined with each other, provided that such combinations do not contradict the inventive concept of the present invention. Such combinations shall likewise be considered as part of the present invention.

## Claims

1. A testing device for an air conditioner, comprising an indoor unit chamber, a first outdoor unit chamber, and a second outdoor unit chamber, wherein
the indoor unit chamber is equipped with a first heat exchanger and a second heat exchanger;
the first outdoor unit chamber is equipped with a first outdoor unit; and
the second outdoor unit chamber is equipped with a second outdoor unit,
the first heat exchanger cooperates with the first outdoor unit for heating the indoor unit chamber, and the second heat exchanger cooperates with the second outdoor unit for cooling the indoor unit chamber,
a heat transfer channel is arranged between two of the indoor unit chamber, the first outdoor unit chamber, and the second outdoor unit chamber, allowing heat to be transferred mutually between the two of the indoor unit chamber, the first outdoor unit chamber, and the second outdoor unit chamber, or allowing heat to be transferred from one to another.

2. The testing device for an air conditioner according to claim 1, wherein the first outdoor unit chamber, the indoor unit chamber, and the second outdoor unit chamber are arranged in a straight line along a predetermined direction.

3. The testing device for an air conditioner according to claim 1 or 2, wherein the heat transfer channel comprises an air flow channel for connecting the two of the indoor unit chamber, the first outdoor unit chamber, and the second outdoor unit chamber.

4. The testing device for an air conditioner according to claim 3, wherein
in a case that the air flow channel connects the indoor unit chamber and the first outdoor unit chamber,
the air flow channel comprises a first air flow channel and a second air flow channel,
the first air flow channel is configured to allow an air in the indoor unit chamber to flow into the first outdoor unit chamber; and
the second air flow channel is configured to allow an air in the first outdoor unit chamber to flow into the indoor unit chamber,
in the case that the air flow channel connects the indoor unit chamber and the second outdoor unit chamber,
the air flow channel comprises the first air flow channel and the second air flow channel,
the first air flow channel is configured to allow an air in the second outdoor unit chamber to flow into the indoor unit chamber; and
the second air flow channel is configured to allow an air in the indoor unit chamber to flow into the second outdoor unit chamber, or
in the case that the air flow channel connects the first outdoor unit chamber and the second outdoor unit chamber,
the air flow channel comprises the first air flow channel and the second air flow channel,
the first air flow channel is configured to allow an air in the second outdoor unit chamber to flow into the first outdoor unit chamber; and
the second air flow channel is configured to allow an air in the first outdoor unit chamber to flow into the second outdoor unit chamber,
preferably,
wherein the first air flow channel is positioned proximate to a top of the testing device, and the second air flow channel is positioned proximate to a bottom of the testing device; or
the first air flow channel and the second air flow channel both are positioned proximate to the top of the testing device.

5. The testing device for an air conditioner according to claim 3 or 4, wherein the air flow channel is equipped with a flow control member, configured to open or close the air flow channel or regulate an opening degree of the air flow channel during the air flowing through.

6. The testing device for an air conditioner according to claim 5, wherein the flow control member is rotatably connected to the air flow channel, the air flow channel is equipped with a stop structure, and the flow control member is detachably abutted against the stop structure.

7. The testing device for an air conditioner according to claim 6, wherein the flow control member comprises a plurality of flow control plates, the plurality of flow control plates each are rotatably connected to the air flow channel, each flow control plate partially overlaps its adjacent next flow control plate, an innermost flow control plate is detachably abutted against the stop structure.

8. The testing device for an air conditioner according to claim 6, wherein a rotation reset structure is provided between the flow control member and the air flow channel, and the rotation reset structure is configured to reset the flow control member to close the air flow channel.

9. The testing device for an air conditioner according to claim 8, wherein
the rotation reset structure is a rotation shaft, a rotation axis of the rotation shaft extends in a horizontal direction and is located above a center of gravity of the flow control member; or
the rotation reset structure is an elastic reset structure applying an elastic force that drives the flow control member to close the air flow channel.

10. The testing device for an air conditioner according to any one of claims 4 to 9, wherein the air flow channel is equipped with a flow control member, configured to open or close the air flow channel or regulate an opening degree of the air flow channel during the air flowing through;
the first air flow channel and the second air flow channel each are equipped with the flow control member, and an opening direction of the flow control member at the first air flow channel is opposite to that at the second air flow channel.

11. The testing device for an air conditioner according to any one of claims 3 to 10, wherein the air flow channel is equipped with a fan for providing power for the air to flow.

12. The testing device for an air conditioner according to any one of claims 1 to 11, wherein the testing device is equipped with an external heat exchange channel for heat exchange between the testing device and a surrounding environment,
preferably,
wherein the external heat exchange channel comprises an external air inflow channel and an external air outflow channel,
the external air inflow channel is configured to allow an ambient air outside the testing device to flow into the testing device; and
the external air outflow channel is configured to allow an air inside the testing device to flow out of the testing device,
more preferably, wherein the external air inflow channel is arranged at one of the indoor unit chamber, the first outdoor unit chamber, and the second outdoor unit chamber; and the external air outflow channel is arranged at one of the indoor unit chamber, the first outdoor unit chamber, and the second outdoor unit chamber,
further preferably, wherein the external air inflow channel is arranged at the second outdoor unit chamber; and the external air outflow channel is arranged at the second outdoor unit chamber,
still further preferably, wherein the external air inflow channel is positioned proximate to a bottom of the second outdoor unit chamber; and the external air outflow channel is positioned proximate to a top of the second outdoor unit chamber.

13. The testing device for an air conditioner according to any one of claims 1 to 12, wherein a heat exchange apparatus for air heating or air cooling is provided inside one of the indoor unit chamber, the first outdoor unit chamber, and the second outdoor unit chamber.

14. The testing device for an air conditioner according to any one of claims 1 to 13, wherein
a first partition is arranged between the indoor unit chamber and the first outdoor unit chamber, the first partition is equipped with a first installation frame, the first heat exchanger is fixed at the first installation frame; and
a second partition is arranged between the indoor unit chamber and the second outdoor unit chamber, the second partition is equipped with a second installation frame, the second heat exchanger is fixed at the second installation frame.

15. The testing device for an air conditioner according to any one of claims 1 to 14, wherein the testing device is provided with a refrigerant outlet for discharging a refrigerant leaking from one or more of the first heat exchanger, the second heat exchanger, the first outdoor unit, or the second outdoor unit.
